# EUROPEAN PATENT APPLICATION

(11) **EP 4 560 049 A1**
(43) Date of publication of application: **28.05.2025**
(21) Application number: 23856687.1
(22) Date of filing: 24.08.2023
(51) Int. Cl.: C23C 22/07, C23C 22/34, C23C 22/74, C09D 5/08, C09D 183/08

(54) **CHROMIUM-FREE INORGANIC SURFACE TREATMENT AGENT FOR GALVANIZED STEEL SHEET, FINISHED GALVANIZED STEEL SHEET AND MANUFACTURING METHOD THEREFOR**

(30) Priority: 25.08.2022 CN 202211029536
(71) Applicant: BAOSHAN IRON & STEEL CO., LTD., Shanghai 201900 (CN)
(72) Inventor: WEI, Xing, Shanghai 201900 (CN); DAI, Yigang, Shanghai 201900 (CN); MA, Yuan, Shanghai 201900 (CN); FANG, Wenqi, Shanghai 201900 (CN)
(74) Representative: Maiwald GmbH
(86) International application number: PCT/CN2023/114608
(87) International publication number: WO 2024/041599

(57) **Abstract**

The present invention discloses a chromium-free inorganic surface treatment agent, wherein the surface treatment agent comprises total solids in percentage by mass of 11.5-15%, with a balance being water; the total solids consist of the following components in percentage by mass: compounded silane coupling agent A: 45-65%; surface-modified aqueous silica sol B: 25%-45%; water-soluble phosphorus-containing compound C: 0.5%-1%, based on a mass of phosphorus element; water-soluble fluorine-containing compound D: 1%-6%, based on a mass of fluorine element; and lubricating additive E: 1%-10%; wherein the compounded silane coupling agent A is obtained by compounding monomers of the following four types of silane coupling agents: epoxy-containing silane A1, monoamino-containing silane A2, alkyl-containing silane A3, and vinyl-containing silane A4.

## Description

### TECHNICAL FIELD

The present invention relates to a surface treatment agent, in particular to a surface treatment agent for galvanized steel plate, a finished galvanized steel plate and a manufacturing method thereof.

### BACKGROUND

In recent years, as a galvanized steel plate has become more and more widely used, it has been widely used in industries such as automobiles, home appliances, and construction.

Research indicates that during practical use, to improve the performance of galvanized steel plate during storage, processing, and service, and to prevent the galvanized steel plate from generating white rust during transportation and storage, anti-corrosion oil is usually applied to the surface of the steel plate during production. To reduce the friction between the galvanized steel plate and the mold during stamping and forming, and to prevent cracking and zinc layer abrasion, lubricating oil is applied to the mold surface during forming, and then the mold surface is cleaned with solvent-based or alkaline degreasers. However, the use of anti-corrosion oil, lubricating oil, and degreasers throughout the process poses significant environmental and cost burdens.

To address this, an improved method in the prior art is to passivate the galvanized steel plate with chromate, or to further coat the surface of the chromate passivation film with an organic resin containing lubricants, achieving a balance between corrosion resistance and processability. However, to meet the increased requirements of environmental protection, chromium-containing post-treatment of the galvanized steel plates are gradually being replaced by environmentally friendly post-treatment methods.

At present, the environmentally friendly, chromium-free galvanized steel plate products feature surface lubricating films that are generally categorized into inorganic type and organic/inorganic composite type. Among them, the inorganic lubricating film mainly conprises inorganic compounds containing elements such as silicon, manganese, and phosphorus. Galvanized steel plate products with such lubricating films exhibit good appearance after deep drawing processing but struggle to balance corrosion resistance and coating performance during service.

In contrast, organic/inorganic composite lubricating films are thin films compounded of resin, corrosion inhibitors, silane coupling agents, silica colloids, and solid lubricating additives, etc. These films offer excellent lubrication, corrosion resistance, and resistance to various chemical agents, such as fingerprint resistance and alkali resistance.

Most galvanizing surface treatment agents currently utilize organic/inorganic composite systems that meet the requirements of most processing and service scenarios. However, in some specific scenarios (such as high-speed continuous stamping and forming, high-temperature coating, and high-temperature environments), the galvanized steel plates coated with these organic/inorganic composite surface treatment agents often suffer issues like blackening of the surface during high-speed continuous forming, unsatisfactory coating performance after high-temperature drying, and discoloration under heat due to the presence of organic components in the surface treatment agents.

For example, during high-speed progressive stamping of motor housings, some parts of the galvanized steel plate's surface film and coating layer inevitably peel off. The continuous high-speed stamping causes the temperature of the stamping die to rise, and the peeled debris accumulates in the lubricating oil. The accumulated debris particles re-adhere to the surface of the formed parts under high-temperature conditions, leading to surface blackening and compromising the appearance of the parts.

Similarly, in the manufacture of liquid crystal modules, which require high strength, good heat dissipation, anti-static properties, and good appearance, the process involves cutting, stamping, cleaning, spraying, and baking. To improve production efficiency, in practice, the drying temperature after cleaning is continuously increased. Conventional post-treatment products fail to meet the requirements of coating performance under such conditions.

In addition, the galvanized steel plate is also used in high-temperature environments, such as in air conditioning tube platesfor securing copper tubes in outdoor air conditioner units. During flame brazing of the copper tubes, the tube plates made of galvanized steel plates are inevitably exposed to burner flames. When the conventional organic/inorganic composite surface-treated steel plates are used in such scenarios, the organic resin-based film undergoes thermal decomposition, causing discoloration and surface cracking, which compromises the appearance.

Currently, many researchers have studied surface treatment agents for galvanized steel plate and have achieved certain technical results, but their practical application effects remain unsatisfactory. Examples include:
The Chinese patent document with the publication number of CN101376859A and the publication date of March 4, 2009, entitled "Treatment agent for surface lubrication of galvanized steel plate and treatment method", discloses an inorganic treatment agent containing manganese, nickel, phosphate ions, and silane, which can form a transparent inorganic film on the surface of the galvanized steel plate, thereby improving the stamping and formability of the galvanized steel plate and eliminating or reducing the phenomenon of zinc adhesion and powdering issues during the forming process. Although this technical solution gives the steel plate good lubrication processability, the corrosion resistance is inferior to chromate passivation products, and the film is easily corroded by alkaline solution, significantly reducing corrosion resistance in alkaline conditions.

The Chinese patent document with the publication number of CN101787527A and the publication date of July 28, 2010, entitled "Galvanized steel plate with excellent processability and alkaline and solvent resistance, and surface treatment agent", discloses a galvanized steel plate with excellent processability and alkaline and solvent resistance, the surface of which is covered with an organic/inorganic composite film. The protective film is mainly composed of an aqueous cationic polyurethane resin and contains one or more organic silane coupling agents, corrosion inhibitors, and oxidized polyethylene particles. The protective film provides the surface of the galvanized steel plate excellent stamping and formability, solvent resistance, and alkali resistance, while also ensuring good corrosion resistance and paint adhesion, etc. However, the technical solution does not address post-cleaning corrosion resistance, making it challenging to ensure corrosion resistance under alkaline conditions for bare-use components like home appliance parts and micro motors.

The Chinese patent document with publication number of CN102666921A and publication date of September 12, 2012, entitled "Surface treatment composition and surface treated steel plate", discloses a post-treatment agent mainly composed of titanate, zirconium carbonate, and phosphate. The galvanized steel plate obtained using this surface treatment composition has good heat-induced discoloration resistance but suffers from significantly insufficient corrosion resistance.

### SUMMARY

To solve the technical problems of the prior art, one objective of the present invention is to provide a chromium-free inorganic surface treatment agent for galvanized steel plate. This chromium-free inorganic surface treatment agent has excellent storage stability, and after being applied to the surface of the galvanized steel plate, it can form a film on the surface of the galvanized steel plate, so that the finished galvanized steel plate (including the galvanized steel plate and the film on its surface) has excellent forming appearance, excellent coating performance after high-temperature drying, and high heat resistance. Additionally, it offers good corrosion resistance, alkali washing resistance, wear resistance, and formability. Therefore, the chromium-free inorganic surface treatment agent has good promotion prospects and application value.

To achieve the above objective, a first aspect of the present invention provides a chromium-free inorganic surface treatment agent, comprising total solids of 11.5-15% in mass percentage, with a balance being water; the total solids consist of the following components in mass percentage:
compounded silane coupling agent (A): 45-65%;
surface-modified aqueous silica sol (B): 25%-45%;
water-soluble phosphorus-containing compound (C): 0.5%-1%, based on a mass of phosphorus element;
water-soluble fluorine-containing compound (D): 1%-6%, based on a mass of fluorine element; and
lubricating additive (E): 1%-10%;

Wherein the compounded silane coupling agent (A) is compounded of monomers of the following four types of silane coupling agents:
epoxy-containing silane (A1), monoamino-containing silane (A2), alkyl-containing silane (A3), and vinyl-containing silane (A4).

In the above solution, the inventors have creatively designed a chromium-free inorganic surface treatment agent, which does not contain chromium and is suitable for surface treatment of galvanized steel plate. When the chromium-free inorganic surface treatment agent is applied on the surface of the galvanized steel plate, a layer of film will be formed on the surface of the galvanized steel plate. The film can ensure that the galvanized steel plate has excellent appearance quality after continuous high-speed forming and can also enable the galvanized steel plate to maintain excellent coating performance after high-temperature baking. Moreover, the film also enables the galvanized steel plate to have good corrosion resistance, alkali washing resistance, and high heat resistance.

In the present invention, the various excellent properties of the chromium-free inorganic surface treatment agent formulated in the present invention are closely related to the compounded silane coupling agent A. In the design, the mass percentage of the compounded silane coupling agent A in the total solids is required to be within 45.0-65.0%. If the mass percentage of the compounded silane coupling agent A is less than 45.0%, the corrosion resistance of the film is insufficient. If the mass percentage of the compounded silane coupling agent A exceeds 65.0%, the adhesion performance of the film becomes excessive, resulting in excessive foreign material adhesion to the surface of formed parts, deteriorating the appearance of stamping and forming, and resulting in appearance degradation under high-temperature service conditions.

In addition, in the present invention, when designing the above-mentioned chromium-free inorganic surface treatment agent, it is also required to specifically control the mass percentage of the surface-modified aqueous silica sol B in the total solids to be 25.0%-45.0%. If the mass percentage of the surface-modified aqueous silica sol B in the total solid parts is lower than 25.0%, the appearance quality of the formed galvanized steel product deteriorates, affecting the coating performance of subsequent parts. If the mass percentage of the surface-modified aqueous silica sol B in the total solid parts is higher than 45.0%, the overall compactness of the film is insufficient, which will cause insufficient corrosion resistance of the processed parts.

Furthermore, in the present invention, the mass percentage of phosphorus in the water-soluble phosphorus-containing compound C in the total solids is controlled to be 0.5%-1.0%. If the mass percentage of phosphorus element is less than 0.5%, the passivation layer at the interface between the substrate and the coating is incomplete, reducing the corrosion resistance of the film. If the mass percentage of phosphorus element is higher than 1.0%, excessive deposition of the passivation layer at the interface deteriorates the film's adhesion.

In the present invention, the mass percentage of fluorine in the water-soluble fluorine-containing compound D in the total solids is controlled to be 1.0%-6.0%. If the mass percentage of fluorine element is less than 1.0%, the reactivity of the surface treatment agent with the surface of the steel plate substrate is insufficient, resulting in a thin surface conversion layer with inadequate corrosion resistance. If the mass percentage of fluorine element is greater than 6.0%, the stability of the surface treatment solution decreases.

Accordingly, in the technical solution of the present invention, the mass percentage of the lubricating addtive E in the total solids is controlled to be 1.0%-10.0%. If the mass percentage of the lubricating additive E is less than 1.0%, the lubricity and wear resistance of the formed film may be insufficient. If the mass percentage of the lubricating additive E exceeds 10.0%, excessive solid lubricant particles in the film create too many interfacial channels, allowing corrosive media to penetrate and reducing the film's corrosion resistance.

Preferably, in some embodiments, the size of the lubricating additive particles is controlled to be 0.2-0.5 microns. If the size of the lubricating additive particles is less than 0.2 microns, the wear resistance of the film is insufficient. If the size of the lubricating additive particles exceeds 0.5 microns, the processability of the film deteriorates.

Preferably, in the chromium-free inorganic surface treatment agent according to the present invention, the epoxy-containing silane A1 includes at least one of the following: 3-glycidyloxypropyltriethoxysilane, 3-glycidyloxypropyltrimethoxysilane, 3-glycidyloxypropylmethyldimethoxysilane, and 3-glycidyloxypropylmethyldiethoxysilane.

Preferably, in the chromium-free inorganic surface treatment agent according to the present invention, the monoamino-containing silane A2 includes at least one of the following: 3-aminopropylmethyldimethoxysilane, 3-aminopropylmethyldiethoxysilane, 3-aminopropyltrimethoxysilane, and 3-aminopropyltriethoxysilane.

Preferably, in the chromium-free inorganic surface treatment agent according to the present invention, the alkyl-containing silane A3 includes at least one of the following: triethoxysilylethane, trimethoxysilylethane, and tetraethyl silicate.

In certain embodiments according to the present invention, the alkyl-containing silane A3 can be: 1,2-bis(triethoxysilyl)ethane, 1,2-bis(trimethoxysilyl)ethane, and tetraethyl silicate.

Preferably, in the chromium-free inorganic surface treatment agent according to the present invention, the vinyl-containing silane A4 includes at least one of the following: vinyltriacetoxysilane, vinyltriisopropenoxysilane, vinyltriisopropoxysilane, vinyltrisilane, vinyltriethoxysilane, and vinyltrimethoxysilane.

In certain embodiments according to the present invention, the vinyl-containing silane A4 can be: vinyltriacetoxysilane, vinyltriisopropenoxysilane, vinyltriisopropoxysilane, vinyltri(2-methoxyethoxy)silane, vinyltriethoxysilane, and vinyltrimethoxysilane.

Preferably, the compounded silane coupling agent is prepared by the following steps:
Hydrolyzing and mixing the epoxy-containing silane A1 and the alkyl -containing silane A3;
After the epoxy-containing silane A1 and the alkyl-containing silane A3 are uniformly mixed, adding the monoamino-containing silane A2;
After forming a uniform mixture of the epoxy-containing silane A1, the monoamino-containing silane A2, and the alkyl-containing silane A3, adding the vinyl-containing silane A4 to the mixture.

More preferably, in the preparation process of the compounded silane coupling agent:
During hydrolysis and mixing of the epoxy-containing silane A1 and the alkyl-containing silane A3, the ratio of the mass percentages of A3 to A1 satisfies: A3/A1= 0.2-0.6;
An addition amount of the monoamino-containing silane A2 satisfies: A2/A1= 0.3-0.7, wherein A1 and A2 represent the mass percentages of the corresponding silanes respectively;
An addition amount of the vinyl-containing silane A4 satisfies: A4/A1= 0.1-0.4, wherein A1 and A4 represent the mass percentage of the corresponding silane respectively.

In the above technical solution according to the present invention, the various excellent properties exhibited by the formula of the chromium-free inorganic surface treatment agent of the present invention are closely related to the compounded silane coupling agent A.

In the process of preparing the compounded silane coupling agent A, the hydrolysis and mixing of the epoxy-containing silane A1 and the alkyl-containing silane A3 must control the ratio of the mass percentages of A3 to A1 to satisfy: A3/A1= 0.2-0.6. The reason for controlling A3/A1 to be 0.2-0.6 is: if the ratio of A3/A1 is lower than 0.2, the quantity of hydrolyzed silanol groups is insufficient, leading to weak chemical bonding with the steel plate substrate , and reduced film adhesion and corrosion resistance during forming. If A3/A1 exceeds 0.6, the designed surface treatment agent is prone to separate into layers, reducing its storage stability.

Accordingly, in the present invention, after mixing the epoxy-containing silane A1 and the alkyl-containing silane A3, the monoamino-containing silane A2 is added in an amount satisfying: A2/A1= 0.3-0.7. This is because: if the value of A2/A1 is less than 0.3, the crosslinking density of the film is insufficient, resulting in poor corrosion resistance. If the value of A2/A1 exceeds 0.7, excessive residual amino groups increase the hydrophilicity of the film, thereby decreasing its corrosion resistance.

After the above three types of silanes are mixed uniformly, add the vinyl-containing silane A4 to the mixture, and the amount of the vinyl-containing silane A4 added is controlled to be: A4/A1= 0.1-0.4. If the value of A4/A1 is lower than 0.1, the coating performance of the film reduces. If the value of A4/A1 is higher than 0.4, the corrosion resistance of the film reduces.

Preferably, in the chromium-free inorganic surface treatment agent according to the present invention, the surface-modified aqueous silica sol B is a silica sol modified with organic compounds containing epoxy, amino, and methyl containing groups. These silica sols can further crosslink with active groups (such as amino, hydroxyl) in the compounded silane coupling agent to improve the resistance of the film. Additionally, these silica sols can reduce the adhesion of the detached film particles to the surface of formed parts during forming, enhancing the surface quality of the formed part.

Preferably, in the chromium-free inorganic surface treatment agent according to the present invention, the water-soluble phosphorus-containing compound C includes phosphates and/or phosphoric acids.

Preferably, in the chromium-free inorganic surface treatment agent according to the present invention, the water-soluble fluorine-containing compound D includes fluorine-containing salts and/or fluorine-containing acids.

Preferably, in the chromium-free inorganic surface treatment agent according to the present invention, the lubricating additive E includes lubricating additives composed of high-density polyethylene particles and high-density polytetrafluoroethylene particles. In the present invention, the high-density lubricating additive (e.g., polyethylene particle or polytetrafluoroethylene particle based lubricating additives) has a density of > 0.96 g/cm³.

Accordingly, another objective of the present invention is to produce a finished galvanized steel plate, comprising a galvanized steel plate and a film formed by applying the above-mentioned surface treatment agent to the surface of the galvanized steel plate.

Preferably, in the finished galvanized steel plate according to the present invention, the thickness of the film is 0.3-1.5 microns.

The present invention enables the formation of an environmentally friendly inorganic surface treatment film on the surface of the galvanized steel plate by applying the above-mentioned surface treatment agent to the surface of the galvanized steel plate. This film can have a single-layer structure. The thickness of the film is controlled to be 0.3-1.5 microns because: if the thickness of the film is less than 0.3 microns, the film is too thin, resulting in insufficient scratch resistance and rust prevention. If the thickness of the film exceeds 1.5 microns, the cost of surface treatment increases. Preferably, the thickness of the film is 0.7-1.3 microns.

Another objective of the present invention is to provide a manufacturing method for the above-mentioned finished galvanized steel plate. The manufacturing method features a simple process flow and effectively produces the above-mentioned finished galvanized steel plate according to the present invention.

A manufacturing method for the finished galvanized steel plate according to the present invention comprises the following steps:
Applying the above-mentioned surface treatment agent to the surface of the galvanized steel plate;
Heating and drying to cure the surface treatment agent to form a film on the surface of the galvanized steel plate.

Preferably, in the above-mentioned manufacturing method, the above-mentioned surface treatment agent is applied to the surface of the galvanized steel plate by roller coating.

In the above-mentioned technical solution according to the present invention, the above-mentioned surface treatment agent can be roller-coated onto both the upper and lower surfaces of the galvanized steel plate. After curing, the thickness of the films on the upper and lower surfaces of the galvanized steel plate is controlled to be 0.3-1.5 microns.

Preferably, in the above-mentioned manufacturing method, the temperature of heating and drying is 80-180°C.

If the temperature of heating and drying is lower than 80°C, the crosslinking of the film is not sufficient, causing reduced performances of the film. If the temperature of heating and drying exceeds 180°C, the properties of some components in the surface treatment agent change, affecting the film formation.

It should be noted that the present invention has no special requirements for the heating and drying method, the method includes hot air heating, induction heating, infrared heating, or a combination of them.

In addition, the present invention has no particular restrictions on the size or shape of the galvanized steel plate.

Compared to the prior art, the chromium-free inorganic surface treatment agent, the finished galvanized steel plate, and the manufacturing method according to the present invention offer the following advantages and beneficial effects:
The present invention provides a chromium-free inorganic surface treatment agent for galvanized steel plates. The surface treatment agent has excellent storage stability, and when applied to the surface of the galvanized steel plate, it can form a film on the surface of the galvanized steel plate. This film endows the galvanized steel plate product with excellent forming appearance, excellent coating performance after high-temperature drying, high heat resistance, and good corrosion resistance, alkali washing resistance, wear resistance, and formability, offering significant prospects for promotion and application value.

The film formed on the surface of the galvanized steel plate by the chromium-free inorganic surface treatment agent according to the present invention can not only ensure the scratch resistance and rust prevention of the galvanized steel plate during processing, but also make the formed parts have excellent appearance quality after the galvanized steel plate undergoes continuous high-speed forming. Furthermore, the film enables the galvanized steel plate to retain excellent coating performance after high-temperature baking.

### DETAILED DESCRIPTION

The following embodiments provide further explanation and illustration of the surface treatment agent, finished galvanized steel plate and manufacturing method thereof described above. However, the explanations and illustrations are not intended to unduly limit the scope of the present invention.

### Examples 1-42 and Comparative Examples 1-9

All the aqueous solutions of the chromium-free inorganic surface treatment agents of Examples 1-42 and the surface treatment agents of Comparative Examples 1-9 contain a certain total solids. The total solids specifically comprise: compounded silane coupling agent A, surface-modified aqueous silica sol B, water-soluble phosphorus-containing compound C, water-soluble fluorine-containing compound D, and lubricating additive E.

All the compounded silane coupling agents A added to the chromium-free inorganic surface treatment agent of Examples 1-42 and the surface treatment agents of Comparative Examples 1-9 were prepared by the following steps:
(1) Hydrolyze and mix epoxy-containing silane A1 and alkyl-containing silane A3, ensuring their mass percentages ratio is controlled to satisfy: A3/A1= 0.2-0.6.
(2) After the epoxy-containing silane A1 and the alkyl-containing silane A3 are evenly mixed, add monoamino-containing silane A2, with the amount of the monoamino-containing silane A2 added satisfying A2/A1= 0.3-0.7, wherein A1 and A2 represent the mass percentage of the corresponding silane respectively.
(3) After the above three types of silanes are evenly mixed, add vinyl-containing silane A4 to the mixture, with the amount of the vinyl-containing silane A4 added satisfying: A4/A1= 0.1-0.4, wherein A1 and A4 represent the mass percentage of the corresponding silane respectively.

That is, in the solution of the present invention, the compounded silane coupling agent A is composed of the following four types of silane coupling agent monomers: epoxy-containing silane A1, monoamino-containing silane A2, alkyl-containing silane A3, and vinyl-containing silane A4. Table 1 lists the types and amounts of silane coupling agent monomers designed for the compounded silane coupling agents A in Examples 1-42 and Comparative Examples 1-9.

**Table 1**

| Number | Compounded silane coupling agent A | | | | | | |
|---|---|---|---|---|---|---|---|
| | Type of A1 | Type of A2 | A2/A1 | Type of A3 | A3/A1 | Type of A4 | A4/A1 |
| Example 1 | A1-1 | A2-2 | 0.51 | A3-1 | 0.2 | A4-2 | 0.39 |
| Example 2 | A1-2 | A2-2 | 0.37 | A3-1 | 0.4 | A4-2 | 0.13 |
| Example 3 | A1-2 | A2-2 | 0.36 | A3-1 | 0.27 | A4-2 | 0.14 |
| Example 4 | A1-1 | A2-1 | 0.3 | A3-1 | 0.49 | A4-2 | 0.38 |
| Example 5 | A1-1 | A2-1 | 0.31 | A3-1 | 0.41 | A4-2 | 0.24 |
| Example 6 | A1-1 | A2-2 | 0.53 | A3-2 | 0.37 | A4-2 | 0.1 |
| Example 7 | A1-2 | A2-2 | 0.63 | A3-1 | 0.53 | A4-1 | 0.19 |
| Example 8 | A1-2 | A2-1 | 0.35 | A3-2 | 0.35 | A4-1 | 0.29 |
| Example 9 | A1-1 | A2-2 | 0.49 | A3-1 | 0.2 | A4-2 | 0.22 |
| Example 10 | A1-1 | A2-1 | 0.33 | A3-2 | 0.22 | A4-1 | 0.18 |
| Example 11 | A1-2 | A2-2 | 0.56 | A3-2 | 0.37 | A4-1 | 0.4 |
| Example 12 | A1-1 | A2-1 | 0.37 | A3-2 | 0.24 | A4-1 | 0.33 |
| Example 13 | A1-1 | A2-2 | 0.67 | A3-1 | 0.41 | A4-2 | 0.33 |
| Example 14 | A1-1 | A2-1 | 0.51 | A3-2 | 0.43 | A4-1 | 0.11 |
| Example 15 | A1-1 | A2-2 | 0.5 | A3-1 | 0.35 | A4-2 | 0.1 |
| Example 16 | A1-2 | A2-2 | 0.32 | A3-1 | 0.45 | A4-2 | 0.22 |
| Example 17 | A1-2 | A2-2 | 0.34 | A3-1 | 0.52 | A4-1 | 0.2 |
| Example 18 | A1-2 | A2-1 | 0.33 | A3-2 | 0.32 | A4-2 | 0.38 |
| Example 19 | A1-1 | A2-1 | 0.63 | A3-1 | 0.3 | A4-1 | 0.4 |
| Example 20 | A1-2 | A2-2 | 0.3 | A3-1 | 0.34 | A4-2 | 0.17 |
| Example 21 | A1-2 | A2-1 | 0.45 | A3-1 | 0.57 | A4-2 | 0.37 |
| Example 22 | A1-2 | A2-1 | 0.39 | A3-1 | 0.33 | A4-2 | 0.1 |
| Example 23 | A1-2 | A2-1 | 0.46 | A3-1 | 0.59 | A4-1 | 0.3 |
| Example 24 | A1-1 | A2-2 | 0.31 | A3-2 | 0.38 | A4-1 | 0.39 |
| Example 25 | A1-2 | A2-2 | 0.66 | A3-2 | 0.52 | A4-1 | 0.33 |
| Example 26 | A1-1 | A2-1 | 0.46 | A3-1 | 0.59 | A4-1 | 0.1 |
| Example 27 | A1-1 | A2-1 | 0.64 | A3-1 | 0.59 | A4-2 | 0.13 |
| Example 28 | A1-1 | A2-2 | 0.55 | A3-2 | 0.59 | A4-2 | 0.11 |
| Example 29 | A1-2 | A2-2 | 0.54 | A3-2 | 0.42 | A4-1 | 0.31 |
| Example 30 | A1-2 | A2-2 | 0.5 | A3-1 | 0.41 | A4-2 | 0.31 |
| Example 31 | A1-2 | A2-2 | 0.66 | A3-1 | 0.51 | A4-2 | 0.35 |
| Example 32 | A1-2 | A2-2 | 0.55 | A3-1 | 0.2 | A4-2 | 0.34 |
| Example 33 | A1-1 | A2-1 | 0.69 | A3-2 | 0.25 | A4-1 | 0.1 |
| Example 34 | A1-2 | A2-1 | 0.37 | A3-2 | 0.34 | A4-2 | 0.24 |
| Example 35 | A1-1 | A2-2 | 0.35 | A3-2 | 0.36 | A4-1 | 0.26 |
| Example 36 | A1-2 | A2-1 | 0.3 | A3-1 | 0.57 | A4-2 | 0.22 |
| Example 37 | A1-2 | A2-2 | 0.52 | A3-2 | 0.31 | A4-2 | 0.21 |
| Example 38 | A1-2 | A2-1 | 0.42 | A3-2 | 0.43 | A4-2 | 0.32 |
| Example 39 | A1-2 | A2-2 | 0.36 | A3-1 | 0.56 | A4-1 | 0.38 |
| Example 40 | A1-1 | A2-2 | 0.32 | A3-1 | 0.43 | A4-2 | 0.24 |
| Example 41 | A1-2 | A2-2 | 0.33 | A3-1 | 0.53 | A4-1 | 0.4 |
| Example 42 | A1-1 | A2-2 | 0.38 | A3-2 | 0.48 | A4-2 | 0.18 |
| Comparative Example 1 | A1-2 | A2-2 | **0.22** | A3-1 | 0.52 | A4-2 | 0.25 |
| Comparative Example 2 | A1-1 | A2-1 | **0.89** | A3-2 | 0.31 | A4-2 | 0.29 |
| Comparative Example 3 | A1-2 | A2-2 | 0.47 | A3-1 | **0.15** | A4-2 | 0.14 |
| Comparative Example 4 | A1-2 | A2-1 | 0.41 | A3-2 | 0.23 | A4-2 | **0.6** |
| Comparative Example 5 | A1-2 | A2-2 | 0.42 | A3-1 | 0.21 | A4-1 | 0.26 |
| Comparative Example 6 | A1-2 | A2-1 | 0.66 | A3-1 | 0.43 | A4-2 | 0.39 |
| Comparative Example 7 | A1-1 | A2-2 | 0.7 | A3-1 | 0.23 | A4-2 | 0.29 |
| Comparative Example 8 | A1-2 | A2-2 | 0.42 | A3-2 | 0.25 | A4-1 | 0.28 |
| Comparative Example 9 | A1-1 | A2-2 | 0.43 | A3-1 | 0.42 | A4-2 | 0.34 |

| | | | | | | | |
|---|---|---|---|---|---|---|---|
| Note: In calculations, for "A3/A1," "A2/A1," and "A4/A1" in Table 1 above, A1, A2, A3, and A4 are substituted with the mass percentage of the corresponding silane respectively. | | | | | | | |

In Table 1, "A1-1" is 3-glycidyloxypropyltrimethoxysilane, and "A1-2" is 3-glycidyloxypropyltriethoxysilane. Certainly, in some other embodiments, silane A1 can also be 3-glycidyloxypropylmethyldimethoxysilane, or 3-glycidyloxypropylmethyldiethoxysilane.

"A2-1" is 3-aminopropyltrimethoxysilane, and "A2-2" is 3-aminopropyltriethoxysilane. Certainly, in some other embodiments, silane A2 can also be 3-aminopropylmethyldimethoxysilane, or 3-aminopropylmethyldiethoxysilane.

"A3-1" is 1,2-bis(triethoxysilyl)ethane, and "A3-2" is tetraethyl silicate. Certainly, in some other embodiments, silane A3 can also be 1,2-bis(trimethoxysilyl)ethane.

"A4-1" is vinyltrimethoxysilane, and "A4-2" is vinyltriacetoxysilane. Certainly, in some other embodiments, silane A4 can also be at least one selected from vinyltriisopropenoxysilane, vinyltriisopropoxysilane, vinyltri(2-methoxyethoxy)silane, and vinyltriethoxysilane.

The chromium-free inorganic surface treatment agents of Examples 1-42 and the surface treatment agents of Comparative Examples 1-9 were prepared based on the compounded silane coupling agent A in Table 1, and the proportions of each component in the total solids added to these surface treatment agents are listed in Table 2 below.

Table 2 lists the components and proportions of each component in the total solids of the surface treatment agents of Examples 1-42 and Comparative Examples 1-9.

**Table 2**

| Number | Mass percentage of total solids in surface treatment agent (%) | Compounded silane coupling agent A | Surface-modified aqueous silica sol B | | Water-soluble phosphorus-containing compound C | | Water-soluble fluorine-containing compound D | | Lubricating additive E | |
|---|---|---|---|---|---|---|---|---|---|---|
| | | Mass percentage of A in total solids (%) | Type of B | Mass percentage of B in total solids (%) | Type of C | Mass percentage of P element in total solids (%) | Type of D | Mass percentage of F element in total solids (%) | Type of E | Mass percentage of E in total solids (%) |
| Example 1 | 14 | 45 | B2 | 35 | C2 | 0.6 | D1 | 5 | E1 | 8 |
| Example 2 | 14.5 | 45 | B3 | 36 | C2 | 0.6 | D1 | 5 | E1 | 7 |
| Example 3 | 12.5 | 45 | B2 | 38 | C1 | 1 | D3 | 3 | E2 | 9 |
| Example 4 | 13 | 45 | B2 | 38 | C1 | 0.8 | D1 | 5 | E2 | 5 |
| Example 5 | 15 | 45 | B3 | 40 | C2 | 0.8 | D3 | 1 | E1 | 10 |
| Example 6 | 11.5 | 48 | B2 | 34 | C1 | 1 | D3 | 3 | E1 | 10 |
| Example 7 | 12.5 | 48 | B1 | 34 | C3 | 0.5 | D1 | 4 | E2 | 9 |
| Example 8 | 12.5 | 48 | B3 | 35 | C2 | 0.9 | D1 | 4 | E2 | 6 |
| Example 9 | 12.5 | 48 | B3 | 40 | C2 | 1 | D1 | 3 | E1 | 2 |
| Example 10 | 14.7 | 48 | B2 | 43 | C3 | 0.9 | D3 | 3 | E2 | 2 |
| Example 11 | 12 | 50 | B2 | 29 | C2 | 1 | D3 | 4 | E1 | 10 |
| Example 12 | 11.5 | 50 | B3 | 34 | C2 | 0.9 | D3 | 4 | E2 | 6 |
| Example 13 | 12 | 50 | B2 | 34 | C3 | 0.7 | D1 | 4 | E1 | 7 |
| Example 14 | 14.5 | 50 | B1 | 35 | C1 | 0.7 | D3 | 5 | E2 | 5 |
| Example 15 | 14 | 50 | B2 | 44 | C2 | 0.7 | D2 | 1 | E1 | 1 |
| Example 16 | 14.5 | 52 | B1 | 29 | C1 | 0.6 | D2 | 4 | E2 | 8 |
| Example 17 | 12.5 | 52 | B2 | 35 | C2 | 0.8 | D1 | 3 | E1 | 4 |
| Example 18 | 12.5 | 52 | B2 | 35 | C3 | 0.9 | D2 | 2 | E1 | 6 |
| Example 19 | 11.5 | 52 | B3 | 40 | C3 | 0.6 | D3 | 1 | E1 | 5 |
| Example 20 | 13.5 | 52 | B2 | 42 | C1 | 0.9 | D3 | 1 | E2 | 1 |
| Example 21 | 14.5 | 55 | B2 | 28 | C1 | 1 | D1 | 3 | E2 | 8 |
| Example 22 | 11.5 | 55 | B1 | 28 | C3 | 0.7 | D3 | 5 | E1 | 7 |
| Example 23 | 11.5 | 55 | B1 | 32 | C3 | 0.8 | D1 | 5 | E1 | 2 |
| Example 24 | 12 | 55 | B1 | 36 | C3 | 0.5 | D3 | 1 | E1 | 6 |
| Example 25 | 13 | 55 | B1 | 36 | C1 | 0.6 | D2 | 2 | E1 | 2 |
| Example 26 | 11.5 | 58 | B1 | 28 | C1 | 0.9 | D1 | 2 | E2 | 7 |
| Example 27 | 14 | 58 | B1 | 28 | C2 | 0.5 | D2 | 2 | E2 | 7 |
| Example 28 | 12 | 58 | B2 | 30 | C3 | 0.7 | D1 | 2 | E2 | 6 |
| Example 29 | 13.5 | 58 | B2 | 30 | C1 | 0.9 | D2 | 3 | E2 | 2 |
| Example 30 | 12 | 58 | B2 | 35 | C3 | 0.5 | D3 | 2 | E2 | 2 |
| Example 31 | 13.5 | 60 | B3 | 25 | C3 | 0.7 | D3 | 5 | E1 | 5 |
| Example 32 | 13.5 | 60 | B2 | 26 | C2 | 0.7 | D2 | 3 | E2 | 4 |
| Example 33 | 15 | 60 | B1 | 29 | C2 | 0.8 | D1 | 2 | E1 | 4 |
| Example 34 | 12.5 | 60 | B1 | 30 | C3 | 0.6 | D1 | 3 | E1 | 3 |
| Example 35 | 12 | 60 | B1 | 32 | C1 | 0.5 | D2 | 2 | E2 | 2 |
| Example 36 | 12 | 62 | B2 | 26 | C1 | 0.6 | D3 | 2 | E1 | 7 |
| Example 37 | 14.5 | 62 | B2 | 26 | C3 | 0.5 | D2 | 3 | E2 | 4 |
| Example 38 | 12 | 62 | B3 | 29 | C1 | 0.7 | D3 | 3 | E1 | 2 |
| Example 39 | 13.5 | 62 | B3 | 31 | C3 | 0.7 | D3 | 2 | E1 | 2 |
| Example 40 | 13 | 62 | B3 | 31 | C2 | 0.6 | D3 | 2 | E1 | 1 |
| Example 41 | 12 | 65 | B3 | 26 | C1 | 0.5 | D2 | 1 | E1 | 5 |
| Example 42 | 14.5 | 65 | B1 | 26 | C3 | 0.6 | D3 | 3 | E2 | 3 |
| Comparative Example 1 | 14 | 53 | B2 | 31 | C3 | 0.8 | D1 | 5 | E1 | 5 |
| Comparative Example 2 | 15 | 55 | B2 | 27 | C1 | 0.5 | D2 | 5 | E1 | 5 |
| Comparative Example 3 | 13 | 52 | B3 | 40 | C1 | 0.5 | D3 | 1 | E1 | 4 |
| Comparative Example 4 | 13 | 52 | B2 | 39 | C3 | 0.5 | D2 | 1 | E1 | 5 |
| Comparative Example 5 | 13.5 | **33** | B1 | 45 | C2 | 0.8 | D2 | 5 | E1 | 8 |
| Comparative Example 6 | 11.5 | 63 | B3 | **16** | C2 | 0.9 | D3 | 5 | E1 | 9 |
| Comparative Example 7 | 15 | 52 | B2 | 35 | C1 | **0.2** | D1 | 4 | E1 | 5 |
| Comparative Example 8 | 13.5 | 46 | B3 | 32 | C2 | 0.5 | D2 | **9** | E2 | 1 |
| Comparative Example 9 | 12 | 52 | B2 | 39 | C1 | 0.9 | D3 | 3 | E2 | **0.5** |

The surface-modified aqueous silica sol B is a silica sol modified with an organic compound containing epoxy, amino, and methyl functional groups. The water-soluble phosphorus-containing compound C includes phosphates and/or phosphoric acids. The water-soluble fluorine-containing compound D includes fluorine-containing salts and/or fluorine-containing acids. The lubricating additive E includes lubricating additives composed of high-density (density > 0.96 g/cm³) polyethylene particles and high-density (density > 0.96 g/cm³) polytetrafluoroethylene particles.

In the above Table 2, the specific types of surface-modified aqueous silica sols B are: "B1" is Yinfeng water-soluble silica sol SW-101, "B2" is Yinfeng water-soluble silica sol SC-101, and "B3" is Akzo Nobel water-soluble silica sol CC301.

The specific types of water-soluble phosphorus-containing compounds C are: "C1" is zinc dihydrogen phosphate, "C2" is ammonium phosphate, and "C3" is hydroxyethylidene diphosphonic acid.

The specific types of water-soluble fluorine-containing compounds D are: "D1" is ammonium fluorotitanate, "D2" is ammonium fluorozirconate, and "D3" is hexafluorotitanic acid.

The specific types of lubricating additives E are: "E1" is polyethylene wax with high-density (density > 0.96 g/cm³), and "E2" is polyethylene wax and polytetrafluoroethylene wax mixed system (brand name ULTRALUBE E-801).

In the present invention, the following steps were used to treat the galvanized steel plate with the aforementioned surface treatment agents:
(1) Wipe the surface of the hot-dip galvanized steel plate with n-heptane/butanone, then place the hot-dip galvanized steel plate in ethanol for ultrasonic cleaning for 20 minutes, then take out the hot-dip galvanized steel plate and wash it with pure water and blow it dry for later use.
(2) Using a wire rod through a roller coating method, apply the surface treatment agent of each Example and Comparative Example to the surface of the corresponding galvanized steel plate. Heat and dry the steel plate at a temperature of 80-180°C to cure the surface treatment agent, forming a film on the surface of the galvanized steel plate. This process yields the finished galvanized steel plates of Examples 1-42 and Comparative Examples 1-9, which are post-treated products covered with a protective film. The thickness of the film formed by the surface treatment agent is listed in Table 3 below.

It should be noted that there is no special limitation on the galvanized steel plate used to form the finished galvanized steel plate (including the galvanized steel plate and the film on its surface) in the present invention, and those skilled in the art can select the desired galvanized steel plate according to specific needs.

Table 3 listes the thickness of surface film and temperature of heating and drying of the finished galvanized steel plates of Examples 1-42 and Comparative Examples 1-9.

**Table 3**

| Number | Thickness of surface film (micron) | Temperature of heating and drying (°C) |
|---|---|---|
| Example 1 | 0.7 | 140 |
| Example 2 | 1.5 | 160 |
| Example 3 | 1.3 | 100 |
| Example 4 | 1.3 | 160 |
| Example 5 | 1.1 | 140 |
| Example 6 | 0.3 | 140 |
| Example 7 | 1.5 | 140 |
| Example 8 | 0.3 | 80 |
| Example 9 | 0.3 | 100 |
| Example 10 | 1.1 | 140 |
| Example 11 | 1.3 | 100 |
| Example 12 | 0.5 | 100 |
| Example 13 | 0.7 | 120 |
| Example 14 | 1.3 | 100 |
| Example 15 | 1.5 | 80 |
| Example 16 | 0.3 | 160 |
| Example 17 | 1.1 | 160 |
| Example 18 | 0.7 | 100 |
| Example 19 | 1.3 | 100 |
| Example 20 | 0.5 | 120 |
| Example 21 | 0.3 | 160 |
| Example 22 | 0.9 | 160 |
| Example 23 | 0.9 | 100 |
| Example 24 | 1.5 | 80 |
| Example 25 | 0.9 | 100 |
| Example 26 | 1.5 | 140 |
| Example 27 | 0.5 | 100 |
| Example 28 | 0.7 | 120 |
| Example 29 | 0.5 | 160 |
| Example 30 | 0.9 | 120 |
| Example 31 | 0.9 | 120 |
| Example 32 | 1.1 | 100 |
| Example 33 | 0.7 | 160 |
| Example 34 | 0.7 | 100 |
| Example 35 | 1.5 | 160 |
| Example 36 | 0.5 | 160 |
| Example 37 | 0.7 | 80 |
| Example 38 | 1.3 | 80 |
| Example 39 | 0.7 | 120 |
| Example 40 | 0.3 | 160 |
| Example 41 | 1.5 | 140 |
| Example 42 | 0.7 | 120 |
| Comparative Example 1 | 1.3 | 100 |
| Comparative Example 2 | 0.5 | 100 |
| Comparative Example 3 | 0.3 | 160 |
| Comparative Example 4 | 0.3 | 120 |
| Comparative Example 5 | 1.3 | 80 |
| Comparative Example 6 | 1.5 | 80 |
| Comparative Example 7 | 0.3 | 160 |
| Comparative Example 8 | 1.3 | 80 |
| Comparative Example 9 | 1.1 | 100 |

To verify the effectiveness of the surface treatment agent of the present invention, the finished galvanized steel plates of Examples 1-42 and Comparative Examples 1-9 were sampled and cut into sizes that meet the corresponding standards, and the following tests were performed to evaluate the various performances of these finished galvanized steel plates. The specific test items and methods are as follows:
1) Corrosion resistance test of sample plates:
   Conduct a salt spray test on the sample plates for 72 hours according to the test standard ASTM B117, and the evaluation criteria are as follows:
   ⊚: white rust area rate less than or equal to 5%;
   ∘: white rust area rate greater than 5% and less than or equal to 10%;
   △: white rust area rate greater than 10% and less than or equal to 50%;
   ×: white rust area rate greater than 50%.
2) Corrosion resistance test after alkali washing:
   Wash samples with a medium alkalinity degreaser (pH 9-11) at 50°C by spraying for 3 minutes. After cleaning, conduct a salt spray test on the sample plates for 72 hours according to the test standard ASTM B117. The evaluation criteria are as follows:
   ⊚: white rust area rate less than or equal to 5%;
   ∘: white rust area rate greater than 5% and less than or equal to 10%;
   △: white rust area rate greater than 10% and less than or equal to 50%;
   ×: white rust area rate greater than 50%.
3) Coating performance test after high-temperature drying:
   After degreasing and washing the sample plates, bake them in an oven at 200°C for 15 minutes, and then conduct coating performance test.

The specific test conditions are: select a Akzo Nobel powder coating product with brand EA05BH, apply a thickness of 60-80 microns, and bake at 200°C for 10 minutes.

After curing, score 100 grids of 1 mm² using a utility knife on the surface of the coating film, and for depth, ensuring the cuts penetrate the film to the surface of the steel plate substrate. Remove the film layer with adhesive tape and observe the remaining grids. The more remaining grids, the better the coating performance of the steel plate for powder. The specific evaluation criteria are:
⊚ : No film peeling;
∘: 0 < film peeling ≤ 5%;
△: 5% < film peeling ≤ 15%;
×: film peeling >15%.

### 4) Heat resistance test:

Put the sample plates in a muffle furnace at 1000°C for 15 seconds and then take them out. After cooling, perform a visual inspection. The evaluation criteria are:
⊚: No cracks on the surface;
∘: Minor cracks on the surface (0 < the ratio of the crack area to the total area of sample plate ≤ 15%);
△: Significant cracks on the surface (the ratio of the crack area to total area of sample plate > 15%).

### 5) Wear resistance test:

Use an eraser wear method with a rubber eraser (diameter Φ of 10mm), a load of 500g, a stroke of 20mm, and a moving speed of 300 mm/min. Perform 50 reciprocating cycles. The specific evaluation criteria are:
⊚: No changes to the film surface;
∘: Minor scratches on the film surface (0 < the ratio of the wear area to the total area of sample plate ≤10%);
△: Significant scratches on the film (10% < the ratio of the wear area to the total area of sample plate ≤ 60%);
×: Film almost completely peeled off (the ratio of the wear area to the total area of sample plate > 60%).

### 6) Compaction bending test:

Compact the sample plates in the bending mold, evaluate the surface condition of the bent side. The evaluation criteria are:
⊚: No blackening on the bent surface;
∘: Minor black spots on the bent surface (0 < the ratio of the blackened area to the total area of sample plate ≤ 10%);
△: Significant black spots on the bent surface (the ratio of the blackened area to the total area of sample plate > 10%).

### 7) Drawbead friction test:

Conduct a drawbead friction test with a downward pressure of a fixed bead being 3 KN, a pressure head diameter being 9.6 mm, and a drawing speed being 200 mm/min. The appearance after drawing is observed and the evaluation criteria are:
⊚: No change in appearance;
∘: Minor black dots on the appearance (0 < the ratio of the blackened area to the total area of sample plate ≤ 20%);
△: Visible black streaks on the appearance (20% < the ratio of the blackened area to the total area of sample plate ≤ 80%);
×: Almost completely blackened (the ratio of the blackened area to the total area of sample plate > 80%).

### 8) Storage stability test:

Store the treatment solution at room temperature and observe the changes of the solution after 90 days. The evaluation criteria are:
⊚: No change;
∘: Slight thickening (still usable) (8 MPa.s< viscosity <12 MPa.s);
△: Severe thickening (0< (weight of solids in the surface treatment agent) / (total weight of the surface treatment agent) <1);
×: Gelation ((weight of solids in the surface treatment agent) / (total weight of the surface treatment agent) = 1).

In cases of severe thickening or gelation, the presence of solids prevents the treatment agent from uniformly spreading on the surface of the galvanized steel plate, affecting its usability.

Table 4 lists the relevant performances of the finished galvanized steel plates of Examples 1-42 and Comparative Examples 1-9 after undergoing the above tests.

**Table 4**

| | Performance | | | | | | | |
|---|---|---|---|---|---|---|---|---|
| | Corrosion resistance of the plate | Corrosion resistance after alkali washing | Coating performa nce | Heat resistance | Wear resistance | Compaction bending | Drawbea d friction | Storage stability |
| Example 1 | ⊚ | ⊚ | ○ | ⊚ | ⊚ | ⊚ | ⊚ | ⊚ |
| Example 2 | ⊚ | ⊚ | ○ | ○ | ⊚ | ○ | ○ | ⊚ |
| Example 3 | ○ | ○ | ○ | ○ | ⊚ | ○ | ○ | ⊚ |
| Example 4 | ○ | ○ | ○ | ○ | ○ | ○ | ○ | ⊚ |
| Example 5 | ○ | ○ | ○ | ○ | ⊚ | ○ | ⊚ | ⊚ |
| Example 6 | ○ | ○ | ○ | ⊚ | ⊚ | ⊚ | ⊚ | ⊚ |
| Example 7 | ⊚ | ○ | ○ | ○ | ⊚ | ○ | ○ | ⊚ |
| Example 8 | ○ | ○ | ⊚ | ⊚ | ○ | ⊚ | ⊚ | ⊚ |
| Example 9 | ○ | ○ | ⊚ | ⊚ | ○ | ⊚ | ⊚ | ⊚ |
| Example 10 | ○ | ○ | ⊚ | ○ | ○ | ○ | ⊚ | ⊚ |
| Example 11 | ○ | ○ | ○ | ○ | ⊚ | ○ | ○ | ⊚ |
| Example 12 | ○ | ○ | ⊚ | ⊚ | ○ | ⊚ | ⊚ | ⊚ |
| Example 13 | ⊚ | ○ | ⊚ | ⊚ | ⊚ | ⊚ | ⊚ | ⊚ |
| Example 14 | ○ | ○ | ⊚ | ○ | ○ | ○ | ○ | ⊚ |
| Example 15 | ○ | ○ | ⊚ | ○ | ○ | ○ | ○ | ⊚ |
| Example 16 | ○ | ○ | ○ | ⊚ | ⊚ | ⊚ | ⊚ | ⊚ |
| Example 17 | ○ | ○ | ○ | ○ | ○ | ○ | ⊚ | ⊚ |
| Example 18 | ○ | ○ | ⊚ | ⊚ | ○ | ⊚ | ⊚ | ⊚ |
| Example 19 | ○ | ○ | ⊚ | ○ | ○ | ○ | ○ | ⊚ |
| Example 20 | ○ | ○ | ⊚ | ⊚ | ○ | ⊚ | ⊚ | ⊚ |
| Example 21 | ○ | ○ | ○ | ⊚ | ⊚ | ○ | ⊚ | ⊚ |
| Example 22 | ⊚ | ⊚ | ○ | ⊚ | ⊚ | ○ | ⊚ | ⊚ |
| Example 23 | ○ | ○ | ⊚ | ⊚ | ○ | ○ | ⊚ | ⊚ |
| Example 24 | ○ | ○ | ⊚ | ○ | ○ | ○ | ○ | ⊚ |
| Example 25 | ○ | ○ | ⊚ | ⊚ | ○ | ○ | ⊚ | ⊚ |
| Example 26 | ○ | ○ | ⊚ | ○ | ⊚ | ○ | ○ | ⊚ |
| Example 27 | ○ | ○ | ⊚ | ⊚ | ⊚ | ○ | ⊚ | ⊚ |
| Example 28 | ○ | ○ | ⊚ | ⊚ | ○ | ○ | ⊚ | ⊚ |
| Example 29 | ○ | ○ | ○ | ⊚ | ○ | ○ | ⊚ | ⊚ |
| Example 30 | ○ | ○ | ⊚ | ⊚ | ○ | ○ | ⊚ | ⊚ |
| Example 31 | ⊚ | ⊚ | ⊚ | ⊚ | ○ | ○ | ⊚ | ⊚ |
| Example 32 | ○ | ○ | ⊚ | ○ | ○ | ○ | ⊚ | ⊚ |
| Example 33 | ○ | ○ | ○ | ⊚ | ○ | ○ | ⊚ | ⊚ |
| Example 34 | ○ | ○ | ⊚ | ⊚ | ○ | ○ | ⊚ | ⊚ |
| Example 35 | ○ | ○ | ○ | ○ | ○ | ○ | ○ | ⊚ |
| Example 36 | ○ | ○ | ○ | ⊚ | ⊚ | ○ | ⊚ | ⊚ |
| Example 37 | ○ | ○ | ⊚ | ⊚ | ○ | ○ | ⊚ | ⊚ |
| Example 38 | ○ | ○ | ⊚ | ○ | ○ | ○ | ○ | ⊚ |
| Example 39 | ○ | ○ | ⊚ | ⊚ | ○ | ○ | ⊚ | ⊚ |
| Example 40 | ○ | ○ | ○ | ⊚ | ○ | ○ | ⊚ | ⊚ |
| Example 41 | ○ | ○ | ⊚ | ○ | ○ | ○ | ○ | ⊚ |
| Example 42 | ○ | ○ | ⊚ | ⊚ | ○ | ○ | ⊚ | ⊚ |
| Comparative Example 1 | **Δ** | × | ⊚ | ○ | ○ | ○ | ○ | ⊚ |
| Comparative Example 2 | × | × | ⊚ | ⊚ | ○ | ○ | ⊚ | ⊚ |
| Comparative Example 3 | **Δ** | **Δ** | ○ | ⊚ | ○ | ⊚ | ⊚ | ⊚ |
| Comparative Example 4 | **Δ** | × | ⊚ | ⊚ | ○ | ⊚ | ⊚ | ⊚ |
| Comparative Example 5 | ○ | × | ○ | ○ | ⊚ | ○ | ○ | ⊚ |
| Comparative Example 6 | ○ | ○ | **Δ** | ○ | ⊚ | **Δ** | **Δ** | ⊚ |
| Comparative Example 7 | × | × | ○ | ⊚ | ○ | ⊚ | ⊚ | ⊚ |
| Comparative Example 8 | ○ | ○ | ⊚ | ○ | ○ | ○ | ○ | **Δ** |
| Comparative Example 9 | ○ | ○ | ⊚ | ○ | **Δ** | ○ | ○ | ⊚ |

It can be seen from Table 4 that the evaluation results of the various performances described above of the finished galvanized steel plates prepared using the chromium-free inorganic surface treatment agents from Examples 1-42 of the present invention are all rated as "⊚" or "∘". This indicates that the chromium-free inorganic surface treatment agents from Examples 1-42 of the present invention have excellent storage stability. When the surface treatment agents described above are used for galvanized steel plates, the galvanized steel plates after surface treatment all show good corrosion resistance, coating performance, heat resistance, and formability.

In addition, an analysis of the finished galvanized steel plates of Comparative Examples 1-9 in conjunction with Tables 1, 2, 3, and 4 reveals that:
Compared to Examples 1-42, the proportions of the components of the compounded silane (A2/A1, A3/A1, A4/A1) in Comparative Examples 1-4 do not meet the requirements specified in the present invention, and the total amount of compounded silane (A) in Comparative Example 5 is insufficient. This results in insufficient crosslinking density in the film, leading to insufficient corrosion resistance of the film.

In Comparative Example 6, the amount of the surface-modified aqueous silica sol B added to the surface treatment agent is insufficient, resulting in deteriorated coating performance and formability of the final film, and the evaluation of the tested sample after the coating performance test after high-temperature drying is rated as "Δ", and the evaluations of the tested sample after the compaction bending test and the drawbead friction test are also rated as "Δ".

In Comparative Example 7, the amount of the water-soluble phosphorus-containing compound C added to the surface treatment agent is insufficient, resulting in poor corrosion resistance of the final film. The tested sample is rated as "×" in both the corrosion resistance test of plate and the corrosion resistance test after alkali washing.

In Comparative Example 8, the excessive addition of water-soluble fluorine-containing compound D in the surface treatment agent results in a sharp decrease in solution stability. The tested sample is rated as "Δ" after the storage stability test.

In Comparative Example 9, the content of lubricating additive E added to the surface treatment agent was insufficient, resulting in insufficient wear resistance of the final film. The tested sample is rated as "Δ" after the wear resistance test.

In summary, the present invention provides a chromium-free inorganic surface treatment agent for galvanized steel plate. The surface treatment agent itself has excellent storage stability, and the film formed by applying it to the surface of the galvanized steel plate makes the finished galvanized steel plate have excellent forming appearance, excellent coating performance after high-temperature drying, and high heat resistance. Additionally, the treated steel plate products demonstrate good corrosion resistance, alkali washing resistance, wear resistance, and formability.

In practical use, the film formed by the surface treatment agent of the present invention on the surface of the galvanized steel plate can not only ensure the scratch resistance and rust prevention of the galvanized steel plate during processing, but also make the formed part have excellent appearance quality after the galvanized steel plate undergoes continuous high-speed forming, and can also enable the galvanized steel plate to still have excellent coating performance after high-temperature baking, making the surface treatment agent high valuable for promotion and application.

It should be noted that the embodiments listed above are only specific examples of the present invention. It is obvious that the present invention is not limited to the above embodiments. Any similar variations or modifications that can be directly derived or easily conceived by those skilled in the art based on the disclosure of the present invention should fall within the protection scope of the present invention.

## Claims

1. A chromium-free inorganic surface treatment agent, wherein the surface treatment agent comprises, in mass percentage, 11.5-15% of total solids, with a balance being water; and wherein the total solids consist of the following components in mass percentage:
compounded silane coupling agent (A): 45-65%;
surface-modified aqueous silica sol (B): 25%-45%;
water-soluble phosphorus-containing compound (C): 0.5%-1%, based on a mass of phosphorus element contained therein;
water-soluble fluorine-containing compound (D): 1%-6%, based on a mass of fluorine element contained therein; and
lubricating additive (E): 1%-10%;
wherein the compounded silane coupling agent (A) is obtained by compounding monomers of the following four types of silane coupling agents: epoxy-containing silane (A1), monoamino-containing silane (A2), alkyl-containig silane (A3), and vinyl-containing silane (A4).

2. The chromium-free inorganic surface treatment agent according to claim 1, wherein the epoxy-containing silane (A1) includes at least one of the following: 3-glycidyloxypropyltriethoxysilane, 3-glycidyloxypropyltrimethoxysilane, 3-glycidyloxypropylmethyldimethoxysilane, and 3-glycidyloxypropylmethyldiethoxysilane.

3. The chromium-free inorganic surface treatment agent according to claim 1, wherein the monoamino-containing silane (A2) includes at least one of the following: 3-aminopropylmethyldimethoxysilane, 3-aminopropylmethyldiethoxysilane, 3-aminopropyltrimethoxysilane, and 3-aminopropyltriethoxysilane.

4. The chromium-free inorganic surface treatment agent according to claim 1, wherein the alkyl-containing silane (A3) includes at least one of the following: triethoxysilylethane, trimethoxysilylethane, and tetraethyl silicate.

5. The chromium-free inorganic surface treatment agent according to claim 1, wherein the vinyl-containing silane (A4) includes at least one of the following: vinyltriacetoxysilane, vinyltriisopropenoxysilane, vinyltriisopropoxysilane, vinyltrisilane, vinyltriethoxysilane, and vinyltrimethoxysilane.

6. The chromium-free inorganic surface treatment agent according to claim 1, wherein the compounded silane coupling agent is prepared by the following steps:
hydrolyzing and mixing the epoxy-containing silane (A1) and the alkyl-containing silane (A3);
after uniformly mixing the epoxy-containing silane (A1) and the alkyl-containing silane (A3), adding the monoamino-containing silane (A2);
after uniformly mixing the epoxy-containing silane (A1), the monoamino-containing silane (A2), and the alkyl-containing silane (A3) to form a mixture, adding the vinyl-containing silane (A4) to the mixture.

7. The chromium-free inorganic surface treatment agent according to claim 6, wherein
when hydrolyzing and mixing the epoxy-containing silane (A1) and the alkyl-containing silane (A3), a ratio of the mass percentage of the alkyl-containing silane (A3) to the mass percentage of the epoxy-containing silane (A1) satisfies: A3/A1= 0.2-0.6;
the amount of the monoamino-containing silane (A2) to be added satisfies: A2/A1= 0.3-0.7, wherein A1 and A2 represent the mass percentages of the corresponding silanes, respectively;
the vinyl-containing silane (A4) is added in a ratio of: A4/A1= 0.1-0.4, wherein A1 and A4 represent the mass percentages of their respective silanes.

8. The chromium-free inorganic surface treatment agent according to claim 1, wherein the surface-modified aqueous silica sol (B) is silica sol modified with an organic compound containing epoxy, amino, and methyl functional groups.

9. The chromium-free inorganic surface treatment agent according to claim 1, wherein the water-soluble phosphorus-containing compound (C) includes phosphates and/or phosphoric acids.

10. The chromium-free inorganic surface treatment agent according to claim 1, wherein the water-soluble fluorine-containing compound (D) includes fluorine-containing salts and/or fluorine-containing acids.

11. The chromium-free inorganic surface treatment agent according to claim 1, wherein the lubricating additive (E) includes lubricating additives composed of high-density polyethylene particles and high-density polytetrafluoroethylene particles.

12. A finished galvanized steel plate, wherein the finished galvanized steel plate comprises a galvanized steel plate and a film formed by applying the chromium-free inorganic surface treatment agent according to any one of claims 1 to 11 to a surface of the galvanized steel plate.

13. The finished galvanized steel plate according to claim 12, wherein the film has a thickness of 0.3-1.5 microns.

14. A method for manufacturing the finished galvanized steel plate according to claim 12 or 13, wherein the method comprises the following steps:
applying the chromium-free inorganic surface treatment agent to a surface of the galvanized steel plate;
heating and drying the chromium-free inorganic surface treatment agent to cure it, to form a film on the surface of the galvanized steel plate.

15. The method according to claim 14, wherein the chromium-free inorganic surface treatment agent is applied to the surface of the galvanized steel plate by roller coating.

16. The method according to claim 14, wherein the heating and drying is performed at a temperature of 80-180°C.
